# EUROPÄISCHE PATENTANMELDUNG

(11) **EP 4 092 497 A1**
(43) Veröffentlichungstag der Anmeldung: **23.11.2022**
(21) Anmeldenummer: 21175315.7
(22) Anmeldetag: 21.05.2021
(51) Int. Cl.: G05B 19/042, G06F 21/53

(54) **BETRIEBSVERFAHREN FÜR FLEXIBLE FUNKTIONSGRUPPEN IN AUTOMATISIERTEN ANLAGEN**

(71) Anmelder: Siemens Aktiengesellschaft, 80333 München (DE)
(72) Erfinder: Kluge, Georg, 76351 Linkenheim (DE); Lutz, Benjamin, 76327 Pfinztal (DE)

(57) **Zusammenfassung**

Betriebsverfahren (100) mit vier Schritten (110, 120, 130, 140) zum Ansteuern einer automatisierten Anlage (20), die eine Mehrzahl an Geräten (26) aufweist, die über eine Mehrbenutzer-Steuerung (40) ansteuerbar sind.

Im ersten Schritt (110) wird die automatisierte Anlage (20) in einem aktiven Betriebszustand bereitgestellt.

Im zweiten Schritt (120) wird ein Abschnitt (45) der automatisierten Anlage (20) ausgewählt, der zumindest ein erstes Gerät (21) aufweist.

Im dritten Schritt (130) werden ein Verknüpfungskriterium (30) des ersten Geräts (21) und ein zweites Gerät (22) ermittelt, das über das Verknüpfungskriterium (30) dem ersten Gerät (21) zugeordnet ist.

Im vierten Schritt (140) wird eine Exklusiv-Steuerberechtigung (16) über das erste und zweite Gerät (21, 22) für einen Benutzer (10) von der Mehrbenutzer-Steuerung (40) angefordert.

Die Erfindung betrifft zudem ein Computerprogrammprodukt (60) zum Durchführen eines solchen Betriebsverfahrens (100), eine Mehrbenutzer-Steuerung (40), mit einem entsprechenden Computerprogrammprodukt (60) und eine automatisierte Anlage (20), mit solcher einen Mehrbenutzer-Steuerung (40).

## Beschreibung

Die Erfindung betrifft ein Betriebsverfahren zum Ansteuern einer automatisierten Anlage. Ebenso betrifft die Erfindung ein Computerprogrammprodukt, das zur Durchführung eines solchen Betriebsverfahrens eingerichtet ist. Genauso betrifft die Erfindung eine Mehrbenutzer-Steuerung für eine automatisierte Anlage, die dazu ausgebildet ist, ein erfindungsgemäßen Computerprogrammprodukt auszuführen. Die Erfindung betrifft gleichermaßen eine entsprechend ausgestattete automatisierte Anlage.

Die Druckschrift JP 2012-208933 A offenbart ein Steuerungsverfahren für eine Speicherprogrammierbare Steuerung, kurz SPS, auf der eine Mehrzahl an Programmen ausführbar ist. Zur Koordinierung der Programme ist ein Ausschlussbefehl auslösbar, durch den die Ausführung von Befehlen anderer Programme blockierbar ist. Infolgedessen ist durch den Ausschlussbefehl exklusiv nur ein Programm auf einmal ausführbar.

Automatisierte Anlagen werden zur Herstellung unterschiedlicher Güter oder von Elektrizität eingesetzt und weisen eine steigende Komplexität auf. Die zunehmende Komplexität erfordert bei zahlreichen automatisierten Anlagen mehrere Benutzer zu deren sicheren Betrieb. Hieraus ergibt sich ein steigender Koordinationsaufwand für die Benutzer, woraus wiederum eine gesteigerte Gefahr einer Fehlbedienung resultiert. Der Erfindung liegt die Aufgabe zugrunde, die Betriebssicherheit einer automatisierten Anlage zu steigern und/oder den Bedienkomfort zu erhöhen.

Die Aufgabenstellung wird durch ein erfindungsgemäßes Betriebsverfahren zum Ansteuern einer automatisierten Anlage gelöst. Die automatisierte Anlage weist eine Mehrzahl an Geräten auf, durch die ein Anlagenprozess in der automatisierten Anlage durchgeführt wird. Die Geräte sind über eine Mehrbenutzer-Steuerung ansteuerbar, die beispielsweise als Operator Station Server mit Operator Station Clients ausgebildet sein kann. Die Mehrbenutzer-Steuerung gehört zur automatisierten Anlage und erlaubt es, mehreren Benutzern gleichzeitig, durch Steuerbefehle auf Geräte der automatisierten Anlage einzuwirken, also zuzugreifen. Das Betriebsverfahren umfasst einen ersten Schritt, in dem die automatisierte Anlage in einem aktiven Betriebszustand bereitgestellt wird. Der aktive Betriebszustand kann ein stationärer Betriebszustand sein, in dem der Anlagenprozess durchgeführt wird, oder ein transienter Betriebszustand, in dem der Anlagenprozess beispielsweise hochgefahren wird. Der aktive Betriebszustand ist als Ausgangszustand des erfindungsgemäßen Betriebsverfahrens aufzufassen. In einem zweiten Schritt erfolgt ein Auswählen eines Abschnitts der automatisierten Anlage durch einen Benutzer. Der ausgewählte Abschnitt umfasst dabei zumindest ein erstes Gerät der automatisierten Anlage. Das erste Gerät kann ein einzelnes Gerät sein oder zu einer Mehrzahl von Geräten gehören, die funktionell als eine Funktionsgruppe zusammenwirken. Eine solche Funktionsgruppe kann unter anderem ein Tank mit einer Mehrzahl an Zulauf- und Ablaufventilen sein.

Es folgt ein dritter Schritt, in dem ein Verknüpfungskriterium ermittelt wird, das dem im zweiten Schritt ausgewählten ersten Gerät zugeordnet ist. Anhand des Verknüpfungskriteriums wird zumindest ein zweites Gerät ermittelt, das dem ersten Gerät darüber zugeordnet ist. Das Verknüpfungskriterium ist als Angabe darüber ausgebildet, in welchem Kontext der automatisierten Anlage das erste und zweite Gerät zusammenwirken oder zumindest aufeinander bezogen sind. Das Verknüpfungskriterium kann beispielsweise in Form von Gerätedaten des ersten und zweiten Geräts unmittelbar hinterlegt sein, unmittelbar in einer Prozessbeschreibung des Anlagenprozesses hinterlegt sein, und/oder aus den Gerätedaten bzw. der Prozessbeschreibung ableitbar sein. Das Verknüpfungskriterium ist beispielsweise durch eine Künstliche Intelligenz ermittelbar und/oder über eine Benutzereingabe ermittelbar. Des Weiteren umfasst das Betriebsverfahren einen vierten Schritt, in dem ein Anfordern einer Exklusiv-Steuerberechtigung über zumindest das erste und zweite Gerät angefordert wird, die im dritten Schritt ermittelt werden. Die Exklusiv-Steuerberechtigung wird von der Mehrbenutzer-Steuerung für den Benutzer angefordert. Die Exklusiv-Steuerberechtigung über das erste und zweite Gerät umfasst, dass der Benutzer, der so anfordert, die alleinige Befehlsgewalt über das erste und zweite Gerät zu erhalten hat.

Das erfindungsgemäße Betriebsverfahren wird zumindest im zweiten Schritt, in dem der entsprechende Abschnitt der automatisierten Anlage ausgewählt wird, über eine graphische Benutzeroberfläche durchgeführt. Mittels einer graphischen Benutzeroberfläche ist der Abschnitt, und somit das erste Gerät, in sinnfälliger Weise präzise durch den Benutzer auswählbar. Das erfindungsgemäße Betriebsverfahren erlaubt es, basierend auf der Auswahl im zweiten Schritt, neben dem ersten Gerät auch das zweite Gerät in das Anfordern der Exklusiv-Steuerberechtigung selbsttätig einzubeziehen. Hierdurch ist unter anderem eine Funktionsgruppe von Geräten, zu denen das erste und zweite Gerät gehören, in einfacher Weise durch den Benutzer auswählbar und von diesem alleine ansteuerbar. Verwicklungen durch weitere Benutzer, die im aktiven Zustand, von dem das Betriebsverfahren ausgeht, auch zum Ansteuern des ersten und/oder zweiten Geräts berechtigt sind, werden vermieden.

Infolgedessen sind beispielsweise in einer Betriebssituation, die ein koordiniertes Vorgehen von mehreren Benutzern verlangt, Konflikte zwischen unterschiedlichen Benutzern, die auf dieselben Geräte mit Steuerbefehlen zugreifen, vermeidbar. Die angeforderte Exklusiv-Steuerberechtigung ist durch das entsprechende Verknüpfungskriterium bedarfs- und situationsgerecht gefasst, weist also in einer Architektur der automatisierten Anlage selbsttätig eine sinnvolle Reichweite auf die entsprechenden Geräte auf. Insbesondere in kritischen Betriebssituationen wird so ein zielgerichtetes Vorgehen durch mehrere Benutzer erleichtert. Das erfindungsgemäße Betriebsverfahren ist dadurch, dass es weitestgehend selbsttätig abläuft, für den Benutzer komfortabel und stellt für diesen eine Entlastung dar. Insgesamt wird so die Betriebssicherheit der automatisierten Anlage gesteigert.

In einer Ausführungsform des beanspruchten Betriebsverfahrens kann in einem fünften Schritt die Exklusiv-Steuerberechtigung für den Benutzer erzeugt werden. Hierdurch wird die Exklusiv-Steuerberechtigung, die im vierten Schritt angefordert wird, für den Benutzer in wirksamer Weise bereitgestellt. Die Exklusiv-Steuerberechtigung kann in Abhängigkeit von einem Ergebnis einer Konfliktprüfung erzeugt werden. Bei der Konfliktprüfung wird ermittelt, ob für das erste und/oder zweite Gerät von einem anderen Benutzer bereits eine Exklusiv-Steuerberechtigung angefordert ist oder für den anderen Benutzer bereits erzeugt ist. Wenn für das erste und/oder zweite Gerät bereits eine Exklusiv-Steuerberechtigung angefordert oder erzeugt ist, wird ein Konflikt erkannt, und dem Benutzer die Erzeugung der angeforderten Exklusiv-Steuerberechtigung verweigert. Andernfalls wird die angeforderte Exklusiv-Steuerberechtigung im fünften Schritt erzeugt. Die Mehrbenutzer-Steuerung ist dazu eingerichtet, Steuerberechtigungen, also auch Exklusiv-Steuerberechtigungen, für Geräte in der automatisierten Anlage zentral zu verwalten und ist dementsprechend geeignet, derartige Konflikte schnell zu identifizieren. Das beanspruchte Betriebsverfahren ist infolgedessen robust gegen Fehlbedienungen von Benutzern, die unberechtigterweise Exklusiv-Steuerberechtigungen anfordern.

Darüber hinaus kann das Verknüpfungskriterium als eine Zugehörigkeit des ersten und zweiten Geräts zu einem Signalflussplan der automatisierten Anlage ausgebildet ist. Durch einen Signalflussplan, auch Continuous Flow Chart oder kurz CFC genannt, definiert einen üblicherweise selbsttätig ablaufenden Teilprozess innerhalb des Anlagenprozesses. Die Signalflusspläne in einem Anlagenprozess sind in der Mehrbenutzer-Steuerung hinterlegt und sind schnell durchsuchbar. Durch das Auswählen des Abschnitts mit dem ersten Gerät im zweiten Schritt sind folglich weitere Geräte, unter anderem das zweite Gerät, ermittelbar, die auf den Teilprozess einwirken, der durch den Signalflussplan bestimmt ist. Ein Benutzer kann folglich mit einem Minimum an Angaben sämtliche hierfür relevanten Geräte auswählen und für diese eine Exklusiv-Steuerberechtigung anfordern. Die entsprechend ausgewählten Geräte, umfassend das erste und zweite Gerät, bilden bezogen auf den Signalflussplan eine Funktionsgruppe. Das Verknüpfungskriterium ist dabei aus einer Geräte-Identifikation der entsprechenden Geräte und der Prozessbeschreibung der automatisierten Anlage ableitbar.

Im beanspruchten Betriebsverfahren kann das Verknüpfungskriterium ferner beispielsweise als Zugehörigkeit des ersten und zweiten Geräts zu einer Gerätekategorie, also einer gemeinsamen Gerätekategorie, ausgebildet sein. Die Gerätekategorie kann beispielsweise alle Wasserventile umfassen, so dass für sämtliche Wasserventile im vom Benutzer ausgewählten Bereich eine Exklusiv-Steuerberechtigung angefordert wird. Ein derartiges Verknüpfungskriterium ist in einfacher Weise über die Gerätedaten, die in der Mehrbenutzersteuerung gespeichert sind, schnell ermittelbar. Der Benutzer kann so unter anderem auf Fehler reagieren, die durch die Bauart der entsprechenden Gerätekategorie bedingt sind und bei einer Mehrzahl dieser Geräte im Wesentlichen gleichzeitig auftreten.

Des Weiteren kann das Verknüpfungskriterium eine einstellbare Verknüpfungstiefe aufweisen, durch die begrenzt ist, wo das zweite Gerät und/oder ein weiteres Gerät, über das eine Exklusiv-Steuerberechtigung anzufordern ist, in der automatisierten Anlage angeordnet sein kann. In einer automatisierten Anlage sind nahezu alle Geräte über eine hinreichende Anzahl an Zwischenstationen, also andere Geräte, miteinander verknüpft. Die Verknüpfungstiefe begrenzt, über wie viele Zwischenstationen hinweg das zweite Gerät im dritten Schritt ermittelt wird, über das eine Exklusiv-Steuerberechtigung anzufordern ist. Die Verknüpfungstiefe kann durch eine Benutzereingabe und/oder eine Vorgabe aus einem Algorithmus eingestellt werden. Alternativ oder ergänzend kann die Verknüpfungstiefe auch durch das Verknüpfungskriterium vorgegeben sein. Wenn beispielsweise die Zugehörigkeit zu einer Gerätekategorie das Verknüpfungskriterium ist, kann eine hohe Verknüpfungstiefe eingestellt sein, durch die sämtliche Geräte in der automatisierten Anlage erreichbar sind. Wenn das Verknüpfungskriterium beispielsweise eine Zugehörigkeit zu einem Signalflussplan ist, kann eine geringe Verknüpfungstiefe eingestellt sein. Das beanspruchte Betriebsverfahren ist in puncto Reichweite in vorteilhafter Weise anpassbar, so dass unnötige Exklusiv-Steuerberechtigungen vermieden werden können. Auch dadurch wird die Betriebssicherheit der automatisierten Anlage weiter gesteigert.

In einer weiteren Ausführungsform des beanspruchten Betriebsverfahrens wird die Exklusiv-Steuerberechtigung im vierten Schritt mit einer Zeitbegrenzung, einer Ereignisbegrenzung und/oder eine Funktionsbegrenzung angefordert. Das Fortbestehen der Exklusiv-Steuerberechtigung ist hierdurch begrenzbar. Insbesondere wird vermieden, dass eine von einem Benutzer erzeugte Exklusiv-Steuerberechtigung über den ursächlichen Zweck hinaus andere Benutzer behindert. Durch eine Zeitbegrenzung kann eine einfache Bedingung zum Aufheben der Exklusiv-Steuerberechtigung aufgestellt werden, die auf alle Fälle eintreten wird. Eine Ereignisbegrenzung kann beispielsweise als ein Deaktivieren eines wählbaren Alarms ausgebildet sein. Dadurch kann eine Exklusiv-Steuerberechtigung schnell aufgehoben werden, wenn ein nicht bestimmungsgemäßer Betriebszustand wieder stabilisiert ist. Eine Funktionsbegrenzung der Exklusiv-Steuerberechtigung kann derart ausgebildet sein, dass die Exklusiv-Steuerberechtigung aufgehoben wird, wenn eine auswählbare Funktion in der automatisierten Anlage wieder einen einsatzfähigen Zustand erreicht. Dies kann beispielsweise der Fall sein, wenn die entsprechende Funktion, beispielsweise ein zugehöriger Signalflussplan, modifiziert wird und wieder in die Steuerung des Anlagenprozesses eingebunden ist.

Ferner kann im vierten Schritt für das erste, zweite und/oder auch ein drittes Gerät ein Exklusiv-Anzeigerecht angefordert werden. Das erste, zweite und/oder dritte Gerät können dazu jeweils einen Sensor aufweisen, über den eine physikalische Größe erfassbar ist, die das erste, zweite, bzw. dritte Gerät oder den Anlagenprozess im entsprechenden Bereich charakterisiert. Durch das Anfordern und Erzeugen des Exklusiv-Anzeigerechts werden die entsprechenden physikalischen Größen nur dem Benutzer angezeigt, der das Exklusiv-Anzeigerecht innehat. Alternativ oder ergänzend kann durch das Exklusiv-Anzeigerecht auch zumindest ein Alarm, der unmittelbar oder mittelbar mit dem ersten, zweiten oder dritten Gerät verknüpft ist, nur dem Benutzer mit dem Exklusiv-Anzeigerecht angezeigt werden. Für andere Benutzer wird so die Darstellung der in der automatisierten Anlage vorliegenden Betriebssituation vereinfacht, wodurch ein koordiniertes Vorgehen durch mehrere Benutzer erleichtert wird. Auch hierdurch wird die Betriebssicherheit der automatisierten Anlage erhöht.

Darüber hinaus kann ein Vorliegen einer erzeugten Exklusiv-Steuerberechtigung einer Mehrzahl an Benutzern der Mehrbenutzer-Steuerung angezeigt werden. Dies kann beispielsweise durch eine Hervorhebung des vom Benutzer im zweiten Schritt ausgewählten Abschnitts in der graphischen Benutzeroberfläche erfolgen. Ein aussichtsloses Anfordern von Exklusiv-Steuerberechtigungen über Geräte, zu denen bereits eine Exklusiv-Steuerberechtigung vorliegt, durch andere Benutzer wird durch eine derartige sinnfällige Darstellung reduziert. Der Bedienkomfort der Mehrbenutzer-Steuerung wird so erhöht.

Des Weiteren kann das beanspruchte Betriebsverfahren im fünften Schritt, in dem die Exklusiv-Steuerberechtigung erzeugt wird, einer Autorisierungsstufe des Benutzers berücksichtigt werden. Die Exklusiv-Steuerberechtigung wird im fünften Schritt in Abhängigkeit von der Autorisierungsstufe des Benutzers erzeugt, durch die begrenzt ist, auf welche Geräte dieser prinzipiell zugreifen darf. Bei einer nicht ausreichenden Autorisierungsstufe kann die Exklusiv-Steuerberechtigung auf die Geräte reduziert erzeugt werden, für die die Autorisierungsstufe genügt. Alternativ kann die Anforderung der Exklusiv-Steuerberechtigung auch vollständig abgelehnt werden, wenn für zumindest ein Gerät eine Exklusiv-Steuerberechtigung angefordert wird, für die die Autorisierungsstufe nicht ausreicht. Hierdurch ist vermeidbar, dass Exklusiv-Steuerberechtigungen erzeugt werden, die für den Benutzer zu kurz greifen und deshalb, insbesondere in einer kritischen Betriebssituation, jedoch den Zugriff auf Geräte durch andere Benutzer verhindert. Folglich wird auch so die Betriebssicherheit der automatisierten Anlage erhöht.

Die zugrundeliegende Aufgabenstellung wird ebenso durch ein erfindungsgemäßes Computerprogrammprodukt gelöst, das dazu ausgebildet ist, in einer automatisierten Anlage eine Mehrzahl an Geräten zu steuern, die zur automatisierten Anlage gehören. Die automatisierte Anlage umfasst auch eine Mehrbenutzer-Steuerung, die mit den Geräten verbunden ist und dazu ausgebildet ist, das erfindungsgemäße Computerprogrammprodukt auszuführen. Erfindungsgemäß ist das Computerprogrammprodukt dazu ausgebildet, zumindest eine Ausführungsform des oben skizzierten Betriebsverfahren auf der automatisierten Anlage auszuführen. Das Computerprogrammprodukt kann dazu monolithisch aufgebaut sein, also sämtliche seiner Funktionen auf einer Hardwareplattform ausführen. Alternativ kann das Computerprogrammprodukt modular aufgebaut sein, also eine Mehrzahl an Teilprogrammen umfassen, die auf unterschiedlichen Hardwareplattformen ausführbar sind und über eine kommunikative Datenverbindung ineinandergreifen um im Zusammenspiel die komplette Funktionsweise des Computerprogrammprodukts verwirklichen. Dazu kann beispielsweise ein Teilprogramm auf einem Lokalterminal der Mehrbenutzer-Steuerung ausgeführt werden und ein weiteres Teilprogramm auf einer übergeordneten Steuereinheit, beispielsweise einer Computer-Cloud, die über eine Internetverbindung miteinander kommunizieren. Ferner kann das Computerprogrammprodukt rein in Software oder festverdrahtet, beispielsweise als Chip, als Integrierte Schaltung, oder FPGA verwirklicht werden. Weiter alternativ kann das Computerprogrammprodukt auch als eine Kombination hieraus ausgebildet sein. Das erfindungsgemäße Computerprogrammprodukt ist in einfacher Weise auch einer bestehenden Mehrbenutzer-Steuerung nachrüstbar und ist weiter modifizierbar.

In einer Ausführungsform des beanspruchten Computerprogrammprodukts umfasst dieses eine Spiegel-Simulation der automatisierten Anlage. Durch die Spiegel-Simulation ist der Anlagenprozess zur Laufzeit abbildbar, so dass stets ein Abgleich zwischen dem vorhandenen ersten, zweiten und/oder dritten Gerät und den entsprechenden Simulationsabbildern in der Spiegel-Simulation möglich ist. Hierdurch ist beispielsweise ein Ausfall eines Geräts, insbesondere eines Sensors, in der automatisierten Anlage erkennbar. Die Spiegel-Simulation kann zu einem Digitalen Zwilling der automatisierten Anlage gehören. Sogenannte Digitale Zwillinge sind unter anderem in der Druckschrift US 2017/286572 A1 näher beschrieben. Der Offenbarungsgehalt von US 2017/286572 A1 wird durch Verweisung in die vorliegende Anmeldung mit einbezogen.

Die Aufgabe wird ebenfalls durch eine erfindungsgemäße Mehrbenutzer-Steuerung gelöst, die zu einem Ansteuern einer Mehrzahl an Geräten einer automatisierten Anlage ausgebildet ist. Die Mehrbenutzer-Steuerung weist eine Recheneinheit und eine Speichereinheit auf und ist mit den Geräten der automatisierten Anlage verbindbar. Die Mehrbenutzer-Steuerung ist dazu ausgebildet zumindest teilweise ein Computerprogrammprodukt auszuführen, das zu einem Ansteuern der automatisierten Anlage ausgebildet ist. Unter einem teilweisen Ausführen ist dabei ein Ausführen eines Teilprogramms zu verstehen, das zum Computerprogrammprodukt gehört. Erfindungsgemäß ist das Computerprogrammprodukt nach einer der oben skizzierten Ausführungsformen ausgebildet und ist so dazu geeignet, zumindest eine Ausführungsform des oben dargestellten Betriebsverfahrens umzusetzen. Eine derartige Mehrbenutzer-Steuerung ist bei einer bestehenden automatisierten Anlage separat nachrüstbar, so dass die technischen Vorzüge des beanspruchten Betriebsverfahrens auch bei bestehenden automatisierten Anlagen erzielbar sind.

Gleichermaßen wird die zugrundeliegende Aufgabe durch eine erfindungsgemäße automatisierte Anlage gelöst. Die automatisierte Anlage umfasst eine Mehrzahl an Geräten, mit denen ein Anlagenprozess durchgeführt wird. Die Geräte, und damit auch die automatisierte Anlage, sind über eine Mehrbenutzer-Steuerung ansteuerbar, also im Wesentlichen gezielt betätigbar. Erfindungsgemäß ist die Mehrbenutzer-Steuerung nach einer der oben dargelegten Ausführungsformen ausgebildet. Dadurch weist die erfindungsgemäße automatisierte Anlage eine erhöhte Betriebssicherheit und ein gesteigertes Maß an Bedienkomfort auf. Die automatisierte Anlage kann als Fertigungsstraße, als Chemiewerk, als Raffinerie, als Kraftwerk, oder als Leitsystem, beispielsweise ein Verkehrsleitsystem, ausgebildet sein.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform des bean-spruchten Betriebsverfahrens;
- FIG 2: schematisch eine zweite Ausführungsform des bean-spruchten Betriebsverfahrens;
- FIG 3: schematisch eine dritte Ausführungsform des bean-spruchten Betriebsverfahrens;
- FIG 4: einen Ablauf einer vierten Ausführungsform des be-anspruchten Betriebsverfahrens.

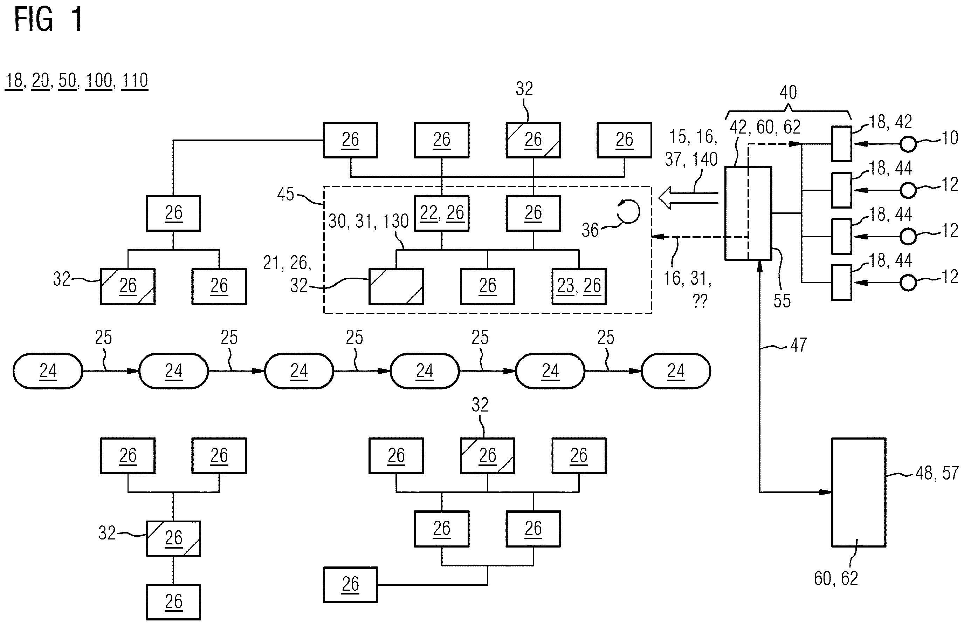

Eine erste Ausführungsform des beanspruchten Betriebsverfahrens 100, das auf einer automatisierten Anlage 20 durchgeführt wird, ist in FIG 1 schematisch dargestellt. Die automatisierte Anlage 100 umfasst eine Mehrzahl an Geräten 26, durch die im Zuge eines Anlagenprozesses 25 auf ein Prozessguts 24 eingewirkt wird. Der Anlagenprozess 25 dient dazu, das Prozessgut 24 zu einer Ware zu verarbeiten. Die Geräte 26 sind über eine Prozesshierarchie miteinander verknüpft, die den Ablauf des Anlagenprozesses 25 vorgibt. Die automatisierte Anlage 20 umfasst auch eine Mehrbenutzer-Steuerung 40, die einen Operator Station Server 42 aufweist, der mit einer Mehrzahl an Operator Station Clients 44 verbunden ist. Die Mehrbenutzer-Steuerung 40 ist dazu ausgebildet, dass zumindest ein Teil der Geräte 26 durch einen Benutzer 10 und mehrere Mitbenutzer 12 ansteuerbar ist. Einige Geräte 26 gehören einer gemeinsamen Gerätekategorie 32 an. Die automatisierte Anlage 20 wird in einem ersten Schritt 110 des Betriebsverfahrens 100 in einem aktiven Betriebszustand bereitgestellt, in dem der Anlagenprozess 25 durchgeführt wird, hochgefahren wird, oder heruntergefahren wird. Ausgehend vom ersten Schritt 110 erfolgt ein zweiter Schritt 120, in dem durch den Benutzer 10 ein Abschnitt 45 über eine graphische Benutzeroberfläche 18 der Mehrbenutzer-Steuerung 40 ausgewählt wird. Der vom Benutzer 10 ausgewählte Abschnitt 45 umfasst ein erstes Gerät 21, das zumindest mittelbar mit einem zweiten und dritten Gerät 22, 23 verknüpft ist. Durch Gerätedaten 31 im ersten, zweiten und dritten Gerät 21, 22, 23 ein Kontext zwischen diesen vorgegeben, der ein Verknüpfungskriterium 30 darstellt. Das Verknüpfungskriterium 30 wird in einem dritten Schritt 130 basierend auf einer Angabe des Benutzers 10 und/oder mittels einer Künstlichen Intelligenz 55 ermittelt. Durch das Verknüpfungskriterium 30 werden durch den Benutzer 10 im Wesentlichen sämtliche Geräte 26 im ausgewählten Abschnitt 45 angefordert, die über ihre Gerätedaten 31 mit dem ersten Gerät 21 verknüpft sind. Derartige Gerätedaten 31 können beispielsweise Feldbus-Adressen sein, über die die Geräte 26 jeweils miteinander kommunizieren. Im dritten Schritt 130 wird ausgehend vom ermittelten Verknüpfungskriterium 30 zumindest das zweite Gerät 22 ermittelt, das mit dem ersten Gerät 21 verknüpft ist. Dies erfolgt unter Berücksichtigung einer einstellbaren Verknüpfungstiefe 36, die über gekrümmte Pfeile in FIG 1 versinnbildlicht ist. Die Verknüpfungstiefe 36 gibt an, über wie viele Stufen innerhalb der Prozesshierarchie auf das Verknüpfungskriterium 30 zu prüfen ist.

Dadurch ist vermeidbar, dass Geräte 26 im dritten Schritt 130 ermittelt werden, die für eine technisch sinnvolle Ermittlung des zweiten Geräts 22 vom ersten Gerät 21 zu weit entfernt sind. Die Verknüpfungstiefe 36 nach FIG 1 hat den Wert 1, so dass als zweites Gerät 22 nur Geräte 26 infrage kommen, die unmittelbar mit dem ersten Gerät 21 verknüpft sind. Die Verknüpfungstiefe 36 ist durch den Benutzer 20 und/oder die Künstliche Intelligenz 55 einstellbar.

In einem vierten Schritt 140 erfolgt ein Anfordern 15 einer Exklusiv-Steuerberechtigung 16 über zumindest das erste und zweite Geräte 21, 22, die im dritten Schritt 130 ermittelt werden. Die angeforderte Exklusiv-Steuerberechtigung 16 überträgt die alleinige Steuergewalt über das erste und zweite Gerät 21, 22 auf den Benutzer 10. Steuerbefehle von den Mitbenutzern 12, die an der erste und/oder zweite Gerät 21, 22 gerichtet sind, werden aufgrund des Exklusiv-Steuerrechts 16 des Benutzers 10 durch die Mehrbenutzer-Steuerung 40 ignoriert oder unterdrückt. Ebenso erfolgt ein Anfordern 15 eines Exklusiv-Anzeigerechts 37 im vierten Schritt 140. Durch das Exklusiv-Anzeigerecht 37 werden Messwerte, die das erste und zweite Gerät 21, 22, die im dritten Schritt 130 ermittelt werden, ausschließlich dem Benutzer 10 angezeigt. Die angeforderte Exklusiv-Steuerberechtigung 16 wird in einem fünften Schritt 150 eingerichtet. Gleichermaßen wird das Exklusiv-Anzeigerecht 37 im fünften Schritt 150 eingerichtet. Nach Abschluss des fünften Schritts 150 ist ein Konflikt zwischen Steuerbefehlen vom Benutzer 10 und von den Mitbenutzern 12 nicht mehr möglich bzw. folgenlos. Die Mehrbenutzer-Steuerung 40 ist mit einem Teilprogramm 62 eines Computerprogrammprodukt 60 ausgestattet, das mit einem weiteren Teilprogramm 62 auf einer übergeordneten Steuereinheit 48 zusammenwirkt. Die Mehrbenutzer-Steuerung 40 ist über eine Datenverbindung 47 mit der übergeordneten Steuereinheit 48 verbunden, die als Computer-Cloud ausgebildet ist. Die Teilprogramme 62 auf der übergeordneten Steuereinheit 48 und der Mehrbenutzer-Steuerung 40 wirken als ein Computerprogrammprodukt 60 zusammen, das dazu ausgebildet ist, das in FIG 1 dargestellte Betriebsverfahren 100 umzusetzen. Zum Computerprogrammprodukt 60 gehört auch eine Spiegel-Simulation 57, die auf der übergeordneten Steuereinheit 48 ausgeführt wird, durch die die Geräte 26 zumindest teilweise in Simulationsabbildern wiedergegeben sind und durch die der Anlagenprozess 25 zur Laufzeit abgebildet ist. Die Spiegel-Simulation 57 ist dabei als Digitaler Zwilling ausgebildet.

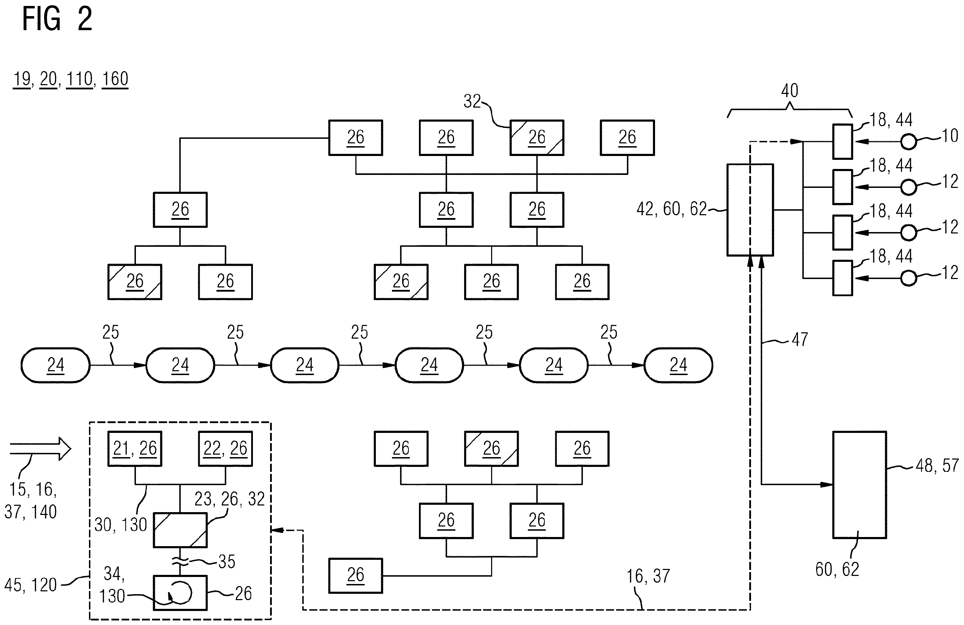

In FIG 2 ist eine zweite Ausführungsform des beanspruchten Betriebsverfahrens 100 dargestellt, das auf einer automatisierten Anlage 20 durchgeführt wird. Die automatisierte Anlage 20 dient dazu, einen Anlagenprozess 25 durchzuführen, bei dem auf ein Prozessgut 24 eingewirkt wird und eine Ware herzustellen. Dazu umfasst die automatisierte Anlage 20 eine Mehrzahl an Geräten 26, durch die unmittelbar oder mittelbar auf das Prozessgut 24 im Anlagenprozess 25 eingewirkt wird. Einige der Geräte 26 gehören zu einer bestimmten Gerätekategorie 32. Die automatisierte Anlage 20 umfasst auch eine Mehrbenutzer-Steuerung 40, die einen Operator Station Server 42 und mehrere Operator Station Clients 42 aufweist. Jeder der Operator Station Clients 42 verfügt über eine graphische Benutzeroberfläche 18 über die ein Benutzer 10 und mehrere Mitbenutzer 12 auf die Geräte 26 mit Steuerbefehlen einwirken können. Die automatisierte Anlage 10 wird in einem ersten Schritt 110 des beanspruchten Betriebsverfahrens 100 in einem aktiven Betriebszustand bereitgestellt, in dem der Anlagenprozess 25 durchgeführt wird, hochgefahren oder heruntergefahren wird. Es folgt ein zweiter Schritt 120, in dem durch den Benutzer 10 ein Abschnitt 45 der automatisierten Anlage 20 über die graphische Benutzeroberfläche 18 ausgewählt wird. Der ausgewählte Abschnitt 45 umfasst zumindest ein erstes Gerät 21, das zu den Geräten 26 gehört, mit denen der Anlagenprozess 25 durchgeführt wird. In einem dritten Schritt 130 wird ein Verknüpfungskriterium 30 ermittelt, das auf das erste Gerät 21 und über das weitere Geräte 26 mit dem ersten Gerät 21 verknüpft sind. Das Verknüpfungskriterium 30 stellt in der in FIG 2 dargestellten Ausführungsform eine Zugehörigkeit zu einem Signalflussplan 34, auch Continuous Flow Chart oder kurz CFC genannt, dar. Der Signalflussplan 34 wird über ein Gerät 26 als selbsttätig ablaufender Teilprozess des Anlagenprozesses 25 implementiert und läuft während des ersten Schritts 110 unabhängig von der Mehrbenutzer-Steuerung 40 ab. Im dritten Schritt 130 wird ein zweites und ein drittes Gerät 22, 23 ermittelt, die zum gleichen Signalflussplan 34 gehören wie das erste Gerät 21.

In einem vierten Schritt 140 erfolgt ein Anfordern 15 einer Exklusiv-Steuerberechtigung 16 und eines Exklusiv-Anzeigerechts 37 über das erste, zweite und dritte Gerät 21, 22, 23. Durch die angeforderte Exklusiv-Steuerberechtigung 16 erhält der Benutzer 10 die alleinige Steuergewalt über das erste, zweite und dritte Gerät 21, 22, 23. Analog erhält der Benutzer 10 durch das angeforderte Exklusiv-Anzeigerecht 37 allein Messwerte, die das erste, zweite und dritte Gerät 21, 22, 23 betreffen. Das Betriebsverfahren 100 umfasst ferner einen fünften Schritt 15, in dem die Exklusiv-Steuerberechtigung 16 und das Exklusiv-Anzeigerecht 37 erzeugt werden. Solange die Exklusiv-Steuerberechtigung 16 besteht, werden Steuerbefehle von den Mitbenutzern 12 durch die Mehrbenutzer-Steuerung 40 ignoriert bzw. unterdrückt. Ferner wird im fünften Schritt 150 auch eine Blockade 35 erzeugt, durch die ein Zugriff des Signalflussplans 34 auf das erste, zweite und dritte Gerät 21, 22, 23 unterbunden wird. Steuerbefehle, die durch den Signalflussplan 34 erzeugt werden, gehen durch die Blockade 35 ins Leere oder werden unterdrückt. Der Signalflussplan 34 läuft infolgedessen wirkungslos ab, also ohne Betätigungen des ersten, zweiten oder dritten Geräts 21, 22, 23. Durch die Exklusiv-Steuerberechtigung 16, die im vierten Schritt 140 angefordert wird und im fünften Schritt 150 erzeugt wird, wird insgesamt der Zugriff durch den Signalflussplan 34 verhindert. Hierdurch wird vermieden, dass Steuerbefehle, die vom Benutzer 10 an das erste, zweite oder dritte Gerät 21, 22, 23 ausgegeben werden, vom Signalflussplan 34 durch gegenläufige Steuerbefehle neutralisiert werden. Folglich ist im Betriebsverfahren 100 nach FIG 2 ein dauerhaftes manuelles Nachsteuern des ersten, zweiten oder dritten Geräts 21, 22, 23 durch den Benutzer 10 entbehrlich.

Zur Umsetzung des Betriebsverfahrens 100 in FIG 2 ist die Mehrbenutzer-Steuerung 40 mit einem Teilprogramm 62 versehen, das zu einem Computerprogrammprodukt 60 gehört, das dazu ausgebildet ist, das Betriebsverfahren 100 auf der automatisierten Anlage 20 zumindest teilweise umzusetzen. Das Computerprogrammprodukt 60 umfasst auch ein Teilprogramm 62, das auf einer übergeordneten Steuereinheit 48 ausgeführt wird. Die Teilprogramme 62 auf der Mehrbenutzer-Steuerung 40 und der übergeordneten Steuereinheit 48 wirken über eine Datenverbindung 47 zusammen und verwirklichen dadurch die Funktion des Computerprogrammprodukts 60. Zum Computerprogrammprodukt 60 gehört auch eine Spiegel-Simulation 57, die auf der übergeordneten Steuereinheit 48 ausgeführt wird, durch die die Geräte 26 zumindest teilweise in Simulationsabbildern wiedergegeben sind und durch die der Anlagenprozess 25 zur Laufzeit abgebildet ist. Die Spiegel-Simulation 57 ist dabei als Digitaler Zwilling ausgebildet.

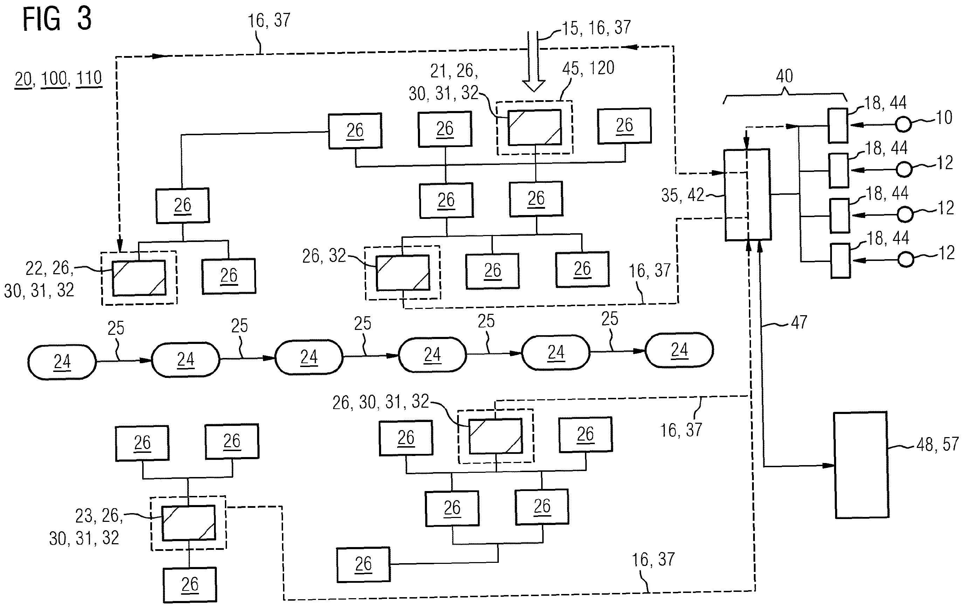

Eine dritte Ausführungsform des beanspruchten Betriebsverfahrens 100 ist in FIG 3 schematisch abgebildet. Das Betriebsverfahren 100 wird auf einer automatisierten Anlage 20 durchgeführt, auf der ein Anlagenprozess 25 durchgeführt wird. Der Anlagenprozess 25 dient dazu, ein Prozessgut 24 zu verarbeiten, um eine Ware herzustellen. Dazu wird mit einer Mehrzahl an Geräten 26 auf das Prozessgut 24 unmittelbar oder mittelbar eingewirkt. Zur Steuerung des Anlagenprozesses 25 verfügt die automatisierte Anlage 20 über eine Mehrbenutzer-Steuerung 40, die einen Operator Station Server 42 und mehrere Operator Station Clients 44 umfasst. Die Mehrbenutzer-Steuerung 40 ist dazu ausgebildet, dass ein Benutzer 10 und mehrere Mitbenutzer 12 Steuerbefehle an die Geräte 26 ausgeben können. Das Betriebsverfahren 100 umfasst einen ersten Schritt 110, in dem die automatisierte Anlage 20 in einem aktiven Betriebszustand bereitgestellt wird. Während des aktiven Betriebszustands wird der Anlagenprozess 25 durchgeführt, hochgefahren oder heruntergefahren. Ausgehend hiervon wird ein zweiter Schritt 120 durchgeführt, in dem vom Benutzer 10 ein Abschnitt 45 der automatisierten Anlage 20 ausgewählt wird, der zumindest ein erstes Gerät 21 umfasst.

Das Betriebsverfahren 100 umfasst auch einen dritten Schritt 130, in dem ein Verknüpfungskriterium 30 ermittelt wird, das auf das erste Gerät 21 zutrifft und einen Kontext zu weiteren Geräten 26 beschreibt. Das Verknüpfungskriterium 30 ist durch den Benutzer 10 und/oder mittels einer Künstlichen Intelligenz 55 in der Mehrbenutzer-Steuerung 40 ermittelt. Das Verknüpfungskriterium 30 in der Ausführungsform nach FIG 3 ist eine Zugehörigkeit zu einer Gerätekategorie 32, in die das erste Gerät 21 fällt. Die Gerätekategorie 32 ist über Gerätedaten 31 ermittelbar, die in den jeweiligen Geräten 26 gespeichert sind und durch die Mehrbenutzer-Steuerung 40 durchsuchbar ist. Die Gerätekategorie 32 in der Ausführungsform nach FIG 3 umfasst sämtliche Wasserventile in der automatisierten Anlage 20. Durch den dritten Schritt 130 wird ausgehend vom ersten Gerät 21 ein zweites Gerät 22 und ein drittes Gerät 23 ermittelt, die in die gleiche Gerätekategorie 32 fallen. In einem vierten Schritt 140 wird für das erste, zweite und dritte Gerät 21, 22, 23 eine Exklusiv-Steuerberechtigung 16 angefordert. Das Anfordern 15 richtet sich an die Mehrbenutzer-Steuerung 40. Analog dazu erfolgt auch ein Anfordern 15 eines Exklusiv-Anzeigerechts 37 zum ersten, zweiten und dritten Gerät 21, 22, 23. Durch die Exklusiv-Steuerberechtigung 16 erhält der Benutzer 10 die alleinige Steuergewalt über das erste, zweite und dritte Gerät 21, 22, 23. Steuerbefehle von Mitbenutzern 12 an das erste, zweite und dritte Gerät 21, 22, 23 werden für die Dauer des Bestehens des Exklusiv-Steuerberechtigung 16 ignoriert bzw. unterdrückt. Korrespondierend bewirkt das Exklusiv-Anzeigerecht 37, dass Messwerte, die auf das erste, zweite und/oder dritte Gerät 21, 22, 23 bezogen sind, allein dem Benutzer 10, aber nicht den Mitbenutzern 12 angezeigt wird. In einem fünften Schritt 150 werden die angeforderte Exklusiv-Steuerberechtigung 15 und das Exklusiv-Anzeigerecht 37 eingerichtet. Durch die bestehende Exklusiv-Steuerberechtigung 16 ist beispielsweise ein Update auf dem ersten, zweiten und dritten Gerät 21, 22, 23 durchführbar ohne dass dieses von einem Steuerbefehl von einem Mitbenutzer 12 oder einen Eingriff eines Signalflussplans 34 wie in FIG 2 unterbrochen wird. Das Betriebsverfahren 100 erlaubt daher einen besonders sicheren Betrieb der automatisierten Anlage 20.

Zur Umsetzung des Betriebsverfahrens 100 in FIG 3 ist die Mehrbenutzer-Steuerung 40 mit einem Teilprogramm 62 versehen, das zu einem Computerprogrammprodukt 60 gehört, das dazu ausgebildet ist, das Betriebsverfahren 100 auf der automatisierten Anlage 20 zumindest teilweise umzusetzen. Das Computerprogrammprodukt 60 umfasst auch ein Teilprogramm 62, das auf einer übergeordneten Steuereinheit 48 ausgeführt wird. Die Teilprogramme 62 auf der Mehrbenutzer-Steuerung 40 und der übergeordneten Steuereinheit 48 wirken über eine Datenverbindung 47 zusammen und verwirklichen dadurch die Funktion des Computerprogrammprodukts 60. Zum Computerprogrammprodukt 60 gehört auch eine Spiegel-Simulation 57, die auf der übergeordneten Steuereinheit 48 ausgeführt wird, durch die die Geräte 26 zumindest teilweise in Simulationsabbildern wiedergegeben sind und durch die der Anlagenprozess 25 zur Laufzeit abgebildet ist. Die Spiegel-Simulation 57 ist dabei als Digitaler Zwilling ausgebildet.

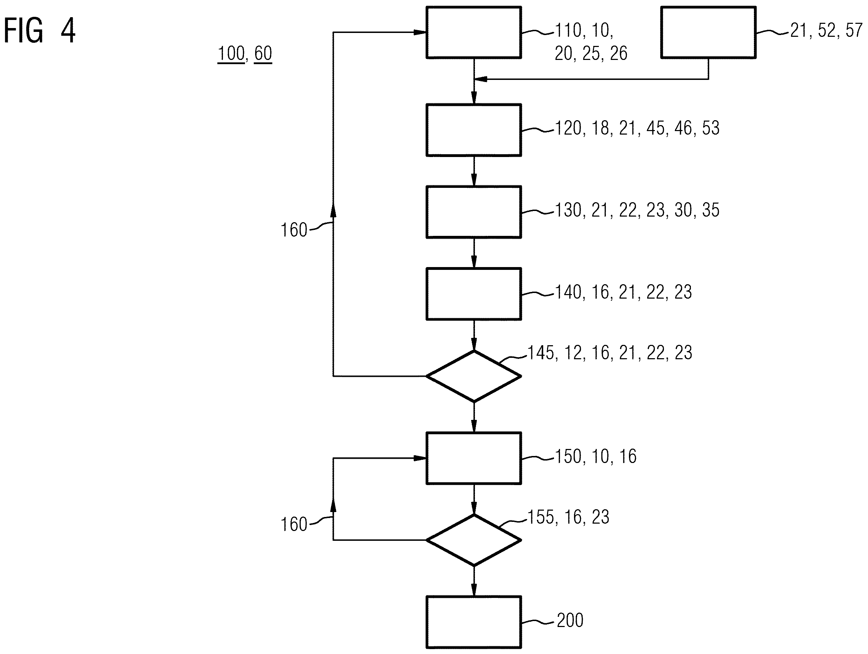

Der Ablauf einer vierten Ausführungsform des beanspruchten Betriebsverfahrens 100 ist in FIG 4 gezeigt, das in einer automatisierten Anlage 20 mit einer Mehrzahl an Geräten 26, mit denen ein Anlagenprozess 25 durchgeführt wird. Das Betriebsverfahren 100 geht in einem ersten Schritt 110 aus, in dem der Anlagenprozess 25 durchgeführt wird. Während des ersten Schritts 110 tritt ein Alarm 52 auf, der ein erstes Gerät 21 betrifft, das zur automatisierten Anlage 20 gehört. Durch den Alarm 52 wird ein nicht bestimmungsgemäßer Betriebszustand der automatisierten Anlage 20 angezeigt. Dieser ist unter anderem mittels einer Spiegel-Simulation 57 der automatisierten Anlage 10 detektierbar. In einem darauffolgenden zweiten Schritt 120 wird von einem Benutzer 10 über eine graphische Benutzeroberfläche 18 einer Mehrbenutzer-Steuerung 40 ein Abschnitt 45 der automatisierten Anlage 20 ausgewählt. Der vom Benutzer 10 ausgewählte Abschnitt 45 umfasst das erste Gerät 21, von dem der Alarm 52 ausgeht. Durch den Benutzer 10 und/oder eine Künstliche Intelligenz 55 auf der Mehrbenutzer-Steuerung 40 wird eine Exklusivrechte-Bedingung 53 erzeugt, die abbildet, dass der Abschnitt 45 vom Benutzer 10 zur Behebung einer Ursache des Alarms 52 ausgewählt ist. Es schließt sich ein dritter Schritt 130 an, in dem ein Verknüpfungskriterium 30 ermittelt wird, über das weitere Geräte 26 mit dem ersten Gerät 21 verknüpft sind. Mittels der Künstlichen Intelligenz 55 ist ermittelbar, welche Geräte 26 im Hinblick auf den Alarm 52 zu bedienen sind, um dem Alarm 52 wirksam zu begegnen. Im dritten Schritt 130 werden das zweite und dritte Gerät 22, 23 ermittelt, die mit den ersten Gerät 21 über das Verknüpfungskriterium 30 in einem Kontext stehen. Es schließt sich ein vierter Schritt 140 an, in dem für das erste, zweite und dritte Gerät 21, 22, 23 eine Exklusiv-Steuerberechtigung 16 für den Benutzer 10 angefordert werden. Darauf folgt eine erste Verzweigung 145 des Betriebsverfahrens 100, an der geprüft wird, ob für das erste, zweite und dritte Gerät 21, 22, 23 bereits eine Exklusiv-Steuerberechtigung 16 eines Mitbenutzers 12 vorliegt. Falls dies zutrifft, führt das Betriebsverfahren 100 eine Rückführschleife 160 aus und gelangt zurück zum ersten Schritt 110. Falls die angeforderte Exklusiv-Steuerberechtigung 16 für den Benutzer 10 verfügbar ist, erfolgt ein fünfter Schritt 150. Im fünften Schritt 150 wird die Exklusiv-Steuerberechtigung 16 für den Benutzer 10 erzeugt. Ab dann besteht für den Benutzer 10 die Möglichkeit, durch Steuerbefehle an das erste, zweite und dritte Gerät 21, 22, 23 der Ursache des Alarms 52 zu begegnet. Während des fünften Schritts 150 durchläuft das Betriebsverfahren 100 eine zweite Verzweigung 155. In der zweiten Verzweigung 155 wird in wiederholten Durchgängen geprüft, ob die Exklusivrechte-Bedingung 53, die im zweiten Schritt 120 erzeugt wird, fortbesteht. In der in FIG 4 gezeigten Ausführungsform ist die Exklusivrechte-Bedingung 53 das weitere Vorliegen des Alarms 52 bzw. dessen Ursache. Wenn die Exklusivrechte-Bedingung 53 fortbesteht, durchläuft das Betriebsverfahren 100 eine Rückführschleife 160, die zurück zum fünften Schritt 150 führt. Solange die Exklusivrechte-Bedingung 53 fortbesteht, bleibt der Zustand aus dem fünften Schritt 150 folglich erhalten. Wenn in der zweiten Verzweigung 155 ein Wegfall der Exklusivrechte-Bedingung 53 festgestellt wird, wird die Exklusiv-Steuerberechtigung 16 aufgehoben und das Betriebsverfahren 100 erreicht einen Endzustand 200. Die Exklusivrechte-Bedingung 53 ist daher als Ereignisbegrenzung ausgebildet. Das Betriebsverfahren 100 wird mittels eines Computerprogrammproduckt 60 ausgeführt, das zumindest teilweise in der Mehrbenutzer-Steuerung 40 ausführbar ist.

## Patentansprüche

1. Betriebsverfahren (100) zum Ansteuern einer automatisierten Anlage (20), die eine Mehrzahl an Geräten (26) aufweist, die über eine Mehrbenutzer-Steuerung (40) ansteuerbar sind, umfassend die Schritte:
a) Bereitstellen der automatisierten Anlage (20) in einem aktiven Betriebszustand;
b) Auswählen eines Abschnitts (45) der automatisierten Anlage (20), der zumindest ein erstes Gerät (21) aufweist, durch einen Benutzer (10);
c) Ermitteln eines Verknüpfungskriteriums 30() des im Schritt b) ausgewählten ersten Geräts (21) und Ermitteln zumindest eines zweiten Geräts (22), das über das Verknüpfungskriterium (30) dem ersten Gerät (21) zugeordnet ist;
d) Anfordern einer Exklusiv-Steuerberechtigung (16) über das erste und zweite Gerät (21, 22) für den Benutzer (10) von der Mehrbenutzer-Steuerung (40);
wobei das Auswählen des Abschnitts (45) der automatisierten Anlage (20) im Schritt b) über eine graphische Benutzeroberfläche (18) der Mehrbenutzer-Steuerung (40) erfolgt.

2. Betriebsverfahren (100) nach Anspruch 1, **dadurch gekennzeichnet, dass** in einem Schritt e) die Exklusiv-Steuerberechtigung (16) für den Benutzer (10) erzeugt wird.

3. Betriebsverfahren (100) nach Anspruch 1 oder 2, **dadurch gekennzeichnet, dass** das Verknüpfungskriterium (30) als Zugehörigkeit des ersten und zweiten Geräts (21, 22) zu einem Signalflussplan (34) der automatisierten Anlage (20) ausgebildet ist.

4. Betriebsverfahren (100) nach einem der Ansprüche 1 bis 3, **dadurch gekennzeichnet, dass** das Verknüpfungskriterium (30) als Zugehörigkeit des ersten und zweiten Geräts (21, 22) zu einer Gerätekategorie (32) ausgebildet ist.

5. Betriebsverfahren (100) nach einem der Ansprüche 1 bis 4, **dadurch gekennzeichnet, dass** das Verknüpfungskriterium (30) eine einstellbare Verknüpfungstiefe (36) aufweist.

6. Betriebsverfahren (100) nach einem der Ansprüche 1 bis 5, **dadurch gekennzeichnet, dass** im Schritt d) die Exklusiv-Steuerberechtigung (16) mit einer Zeitbegrenzung, einer Ereignisbegrenzung, und/oder einer Funktionsbegrenzung angefordert wird.

7. Betriebsverfahren (100) nach einem der Ansprüche 1 bis 6, **dadurch gekennzeichnet, dass** im Schritt d) über das erste, das zweite und/oder ein drittes Gerät (21, 22, 23) ein Exklusiv-Anzeigerecht (37) angefordert wird.

8. Betriebsverfahren (100) nach einem der Ansprüche 1 bis 7, **dadurch gekennzeichnet, dass** im Schritt e) die Exklusiv-Steuerberechtigung (16) in Abhängigkeit von einer Autorisierungsstufe des Benutzers (10) erzeugt wird.

9. Betriebsverfahren (100) nach einem der Ansprüche 2 bis 8, **dadurch gekennzeichnet, dass** ein Vorliegen der erzeugten Exklusiv-Steuerberechtigung (16) einer Mehrzahl an Benutzern (12) der Mehrbenutzer-Steuerung (40) angezeigt wird.

10. Computerprogrammprodukt (60) zum Steuern einer automatisierten Anlage (20), die eine Mehrzahl an Geräten (26) umfasst, mittels einer Mehrbenutzer-Steuerung (40), **dadurch gekennzeichnet, dass** das Computerprogrammprodukt (60) zu einem Durchführen eines Betriebsverfahrens (100) nach einem der Ansprüche 1 bis 9 ausgebildet ist.

11. Computerprogrammprodukt (60) nach Anspruch 10, **dadurch gekennzeichnet, dass** das Computerprogrammprodukt (60) eine Spiegel-Simulation (57) der automatisierten Anlage (20) umfasst.

12. Mehrbenutzer-Steuerung (40) zum Ansteuern einer Mehrzahl an Geräten (26) einer automatisierten Anlage (20), die mit dem Geräten (26) verbindbar ausgebildet ist und zu einem zumindest teilweisen Ausführen eines Computerprogrammprodukts (60) zum Steuern der automatisierten Anlage (20) ausgebildet ist, **dadurch gekennzeichnet, dass** das Computerprogrammprodukt (60) nach Anspruch 10 oder 11 ausgebildet ist.

13. Automatisierte Anlage (20), umfassend eine Mehrzahl an Geräten (26) zur Durchführung eines Anlagenprozesses (25), die über eine Mehrbenutzer-Steuerung (40) ansteuerbar sind, **dadurch gekennzeichnet, dass** die Mehrbenutzer-Steuerung (40) nach Anspruch 12 ausgebildet ist.
